(19) Europäisches Patentamt
European Patent Office
Office européen des brevets

(11) EP 1 754 436 A1

(12) EUROPEAN PATENT APPLICATION

(43) Date of publication:
**21.02.2007 Bulletin 2007/08**

(51) Int Cl.:
*A47J 43/24* (2006.01) *C08L 83/04* (2006.01)

(21) Application number: **06012882.4**

(22) Date of filing: **22.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **19.08.2005 CN 200510093953**

(71) Applicant: **SAR HOLDINGS INTERNATIONAL LIMITED**
**Central**
**Hong Kong (CN)**

(72) Inventors:
- **Carallo, Nunzia Paola**
**20124 Milano (IT)**
- **Yeung, Kim Ching Ricky**
**491-501 Castle Peak Road, Tsuen Wan, N.T (HK)**

(74) Representative: **Koepe, Gerd L.**
**Koepe & Partner**
**Robert-Koch-Strasse 1**
**80538 München (DE)**

(54) **Silastic colander and its manufacturing method**

(57) This invention relates to a colander consisting of a handle portion and a body portion, wherein the body portion is made from silicon-rubber material. The present invention also provides a method of manufacturing such colander.

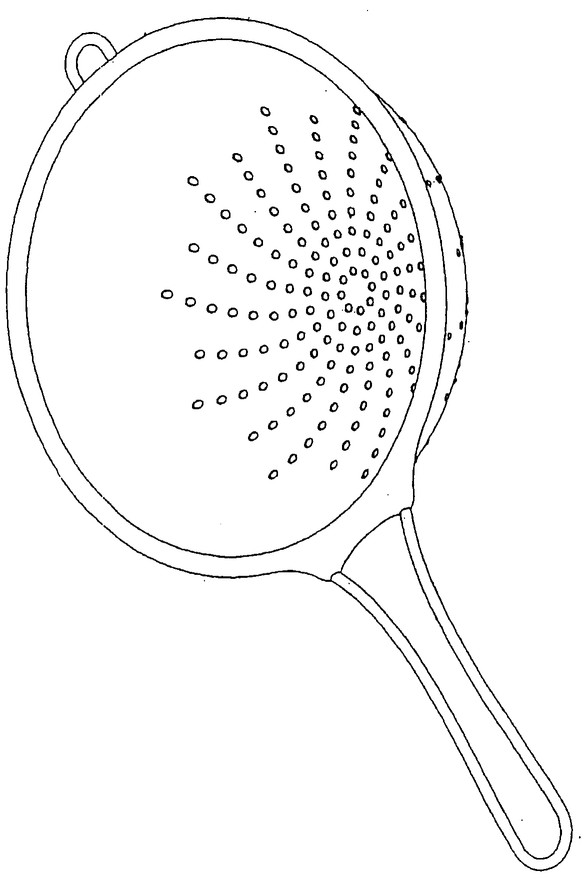



Printed by Jouve, 75001 PARIS (FR)

## Description

### Field of the Invention

The present invention relates to a colander, whose body portion is made of silastic material. This invention also relates to a method of manufacturing such colander.

### Background of the Invention

Presently, the body portion of most of colanders in the market is made of stainless steel, which is of anti-erosion, high intension, anti-high temperature and oxidation, high rigidity, cleanness, and high smoothness, and being exquisite and attractive in structure. Thus, stainless steel colander has an important position in the market for a long time.

However, stainless steel colander requires steel as its raw material, has a high requirement of processing, and quotes a high price. Therefore, it needs a new material, which can keep advantages of stainless steel as well as be easy in processing and low in price, to replace stainless steel to manufacture colander.

The prior arts have developed lots of kitchenware made by resin materials, such as US patent 5,438,097 and 5,502,107 disclosed a polystyrene composition modified by silicon-rubber powder; this composition is good in anti-impingement so as to be able to be used in various fields including kitchenware for freezing and heating foods.

US 4,623,565 discloses a kitchenware using for microwave oven. The said kitchenware, based on thermoplastic polyester resin, is daubed with siloxane resin dope on the surface, which makes foods hard to adhere to the kitchenware and thus makes it easy to be cleaned.

### Summary of the Invention

The present invention is to seek a synthetic material for manufacturing colander. According to the prior arts and based on research, the inventor finds that a silicon-rubber material can be used to replace stainless steel to make colander. This silastic material, which is not dissolving in water or any other solvents, is nontoxic, flavorless, stable in chemical property, strong resistance to erosion, hot oxygen, difficult to distort and good in elasticity. Colanders made by this silastic do not only have all the well features of the stainless colanders but also is low in price and easy to process due to the easily synthetic character of silastic material Furthermore, as foods are not easy to adhere to the kitchenware thus makes it easy to clean; and as silastic has good in elasticity, which makes the body of the colander retractable and thus convenient in using and storing such silastic colander.

Accordingly, the purpose of the present invention is to provide a colander consisting of a handle portion and a body portion, wherein the body portion is made from silastic material.

Another purpose of the present invention is to provide a method of manufacturing such colander.

### Brief Description of the Drawings

FIG. 1 is a three-dimensional view of a colander of an embodiment in the present invention.
FIG. 2 is a front view of the colander.
FIG. 3 is a back view of the colander.
FIG. 4 is a right view of the colander.
FIG. 5 is a top view of the colander.
FIG. 6 is a bottom view of the colander.

Detailed descriptions of the invention are as follows:

The colander of the present invention consisting of a handle portion and a body portion is similar to ordinary colanders. The handle portion is the same as the handle portion of common colander in prior art, whose shapes can be any suitable forms and can be made of any suitable materials such as plastic, metal and combination of metal and wood, etc.

The technical feature of the present invention consists in the body portion, which is made from silastic material.

Suitable silastic material is made by mixing a silicone with a crosslinking agent, and/or reacting with a catalyst. For example, it can be made by mixing and reacting from a Polydiorganosiloxane that can connect an alkenyl with silicon, mixing the Polydiorganosiloxane with a peroxide crosslinking agent or Pt and polyorganohydrogensiloxane crosslinking agent to react together, then manufactured the silicon-rubber.

Preferred polydiorganosiloxane that can connect an alkenyl with silicon is bis-methyl-vinylsiloxane gel, preferred polymerization degree is 7000~8000.

The examples of polyorganohydrosiloxane crosslinking agent are as follows:

- Trimethylsiloxyl terminated polymethylhydro siloxane;
- Trimethylsiloxyl terminated dimethicone/methylhydro siloxane copolymer;
- Bismethylphenylsiloxyl terminated methylphenyl siloxane/methylhydro siloxane copolymer.

Preferred structural formula of the polyorganohydrosiloxane is:

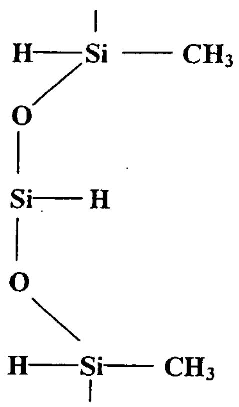

The amount of the polyorganohydrosiloxane crosslinking agent is about 0.1%~10% of the amount of other ingredients in weight.

The peroxide includes benzoperoxide, 2,4-dichloro-benzoperoxide, dicumyl peroxide, di-t-butyl peroxide, p-1-chlorobutyryl peroxide, 2,5-dimethyl-2, 5-bis-t-butyl hexaneperoxide, bis(t-butyl peroxy)peroxide, 2,5-dimethyl-2,5-bis(t-butyl peroxy)hexane, and t-butyl cumyl peroxide. The preferred crosslinking agent is 2,5-dimethyl-2, 5-bis-t-butyl hexaneperoxide; the more preferred crosslinking agents are commercial available products named C-8, C-8A or C-8B manufactured by Shin-Etsu Silicone of Japan. The amount of the peroxide crosslinking agent is about 0.3%~4% of the amount of other ingredients in weight.

The examples of Pt catalyst are platinum black, Hydrochloroplatinic acid, platinum tetrachloride, Hydrochloroplatinic-alkene complexes, or Hydrochloroplatinimethylvinylsiloxane complexes and so on.

The method of manufacturing the silastic is as follows:

Reaction route A: Bis-methyl-vinylsiloxane gel + Peroxide → Product

Reaction route B: Bis-methyl-vinylsiloxane gel + ployorganohydrosiloxane $\xrightarrow{Pt}$ Product

The method of molding the silastic is as follows:

Compressing molding: Using hydraulic machine, under pressure of 50~250 tf/cm$^2$, temperature 80~250°C, lasting for 60~2000 seconds depending on different sizes of the moulds, then molding out the products.

Injection molding: Using injection machine, under pressure of 10~200 Kgf/cm$^2$, temperature 80~250°C, lasting for 60~2000 seconds.

Hot air vulcanizing: Malaxating the mixtures, by multiple rollers with certain thickness, putting into an oven under temperature of 80~230°C, molding for 60-600 seconds.

The product from the above reaction route B is baked under temperature of 120~220°C for 1~16hrs to obtain the silastic of the present invention.

The product from reaction route A is baked under temperature of 120~220°C for 1~16hrs, then cleaned by hot water for 4~16hrs, and then purged by the S&E triple- trough gas-phase ultrasonic cleaner 3036C under supersonic frequency of 28KHz and supersonic power of 21600W, lasting for 5~30 minutes to get the silastic of the present invention.

The colander of the present invention can be made by traditional mold pressing method. For example, it can be made as following steps: Firstly, pressing and molding the silastic material to form an annular portion connecting the body portion and the handle portion of the colander; putting the handle into the mould and molding the silastic to cover the annular portion of the handle. Secondly, putting the silastic material into the mould to mold out the body portion of the colander. Or firstly, pressing out a annular portion connecting the body portion and the handle portion of the colander by putting the silastic material into a mould; putting the handle into the mould, then adding the materials that for producing the body other than molding out the annular portion; and then molding out the body portion and the annular portion of the handle together. Alternatively, using the mould especially for colander manufacturing to make out the colander at one time only.

The silastic material of the present invention could be liquid silastic with good fluidity. When using liquid silastic, the method could be injected molding, especially for the method of molding shape one time only.

The shape of the present could be any suitable form, and there's no restriction for the size of the colander.

Detailed Description of Preferred Embodiments

Embodiment 1

Mixing 100 shares of bis-methyl-vinylsiloxane gel by weight with 2 shares of C-8 by weight to form silastic, then inpouring the silastic into a mould (the annular portion of the handle), and then compressing and vulcanizing it for 10 minutes under temperature of 165°C by traditional compression molding method to shape out the annular portion of the handle; after that, inpouring the silastic into another mould (the body portion), vulcanizing and pressing it for 10 minutes under temperature of 165°C by traditional compression molding method, then baking it for 4 hours under 200 °C to get the colander of the present invention.

Embodiment 2

Mixing 100 shares of bis-methyl-vinylsiloxane gel by weight with 0.5 share of C-8A by weight to get

silastic, then inpouring the silastic into a mould (the annular portion of the handle), and then compressing and vulcanizing it for 5 minutes under temperature of 165°C by traditional compression molding method to shape out the annular portion of the handle; after that, inpouring the silastic into another mould (the body portion), vulcanizing and pressing it for 5 minutes under temperature of 165°C by traditional compression molding method, then baking it for 4 hours under 200 °C to get the colander of the present invention.

Embodiment 3

Mixing 100 shares of bis-methyl-vinylsiloxane gel by weight with 1 share of C-8B by weight to get the silastic, then inpouring the silastic into a mould for strainer, and then vulcanizing and pressing it for 10 minutes under temperature of 165°C by traditional compression molding method, and baking it for 4 hours under 200 °C to get the colander of the present invention.

Embodiment 4

Mixing 100 shares of bis-methyl-vinylsiloxane gel by weight with 3 shares of C-8 by weight to get silastic, then inpouring the silastic into a mould for colander, and then vulcanizing and pressing it for 10 minutes under temperature of 155°C by traditional compression molding method, and baking for 4 hours under 200°C to get the colander of the present invention.

Embodiment 5

Mixing 100 shares of bis-methyl-vinylsiloxane gel by weight with 0.5 share of polyorganohydrosiloxane and Pt by weight, 2.5 shares of C-19 (having restrain agent HC≡C compound, structure formula as R1C≡CR2, both R1 and R2 are reactive free radical, commercial available from Shin-Etsu Silicone, Japan) to get silastic; then inpouring silastic into a mould for colander, and then vulcanizing and pressing it for 10 minutes under temperature of 155°C by traditional compression molding method, and baking it for 4 hours under 200°C to get the colander of the present invention.

Embodiment 6

Mixing 100 shares of bis-methyl-vinylsiloxane gel by weight with 1.5 shares of C-3 by weight to form silastic, then inpouring the silastic into a mould for colander, and then vulcanizing and pressing it for 10 minutes under temperature of 165°C by traditional compression molding method, and baking for 4 hours under 200 °C to get the colander of the present invention.

Although the present invention has been described with specific terms, it should be noted that the described embodiments are not necessarily exclusive, and that various changes and modifications may be made thereto without departing from the scope of the present invention as defined in the appended claims.

## Claims

1. A colander having a handle portion and a body portion, wherein the material of said body portion is silastic.

2. The colander of claim 1, wherein said silastic is made by mixing a silicone raw material with a crosslinking agent, and/or reacting it with a catalyst.

3. The colander of claim 2, wherein said silicone raw material is a polydiorganosiloxane that can connect an alkenyl with silicon, preferably wherein said polydiorganosiloxane that can connect an alkenyl with silicon is bis-methyl-vinylsiloxane gel.

4. The colander of any item of claims 2 to 3, wherein said crosslinking agent is polyorganohydrosiloxane, preferably wherein the amount of said crosslinking agent is about 0.1 % to 10 % of the total amount of other ingredients in weight.

5. The colander of claim 2, wherein said crosslinking agent is peroxide, preferably wherein the amount of said crosslinking agent is about 0.3 % to 4 % of the total amount of other ingredients in weight.

6. The colander of claim 5, wherein said peroxide is selected from benzoperoxide, 2,4-dichloro-benzoperoxide, dicumyl peroxide, di-t-butyl peroxide, p-1-chlorobutyryl- peroxide, 2,5-dimethyl-2,5-bis-t-butyl hexaneperoxide, bis (t -butyl peroxy)-peroxide, 2,5-dimethyl- 2,5 -bis (t-butylperoxy) hexane, t-butyl cumyl peroxide, preferably wherein said peroxide is 2,5-dimethyl-2, 5-bis-t-butyl hexane peroxide.

7. The colander of any one of claims 2 to 3, wherein said catalyst is a Pt catalyst.

8. A method of producing the colander according to any of claims 1 to 7, comprising the step of compression molding the silastic in a mould to form a colander.

9. The method of claim 8, wherein the molding step comprises the steps of vulcanizing, pressing and baking.

10. The method of claims 8 or 9, wherein said silastic material is made by mixing a silicone raw material with a crosslinking agent, and/or reacting it with a catalyst.

11. The method of claim 10, wherein said silicone raw material is a polydiorganosiloxane that can connect

an alkenyl with silicon, preferably wherein said polydiorganosiloxane that can connect an alkenyl with silicon is bis-methyl-vinylsiloxane gel.

**12.** The method of claim 10, wherein said crosslinking agent is a polyorganohydrosiloxane, preferably wherein the amount of said crosslinking agent is about 0.1 % to 10% of the total amount of other ingredients in weight.

**13.** The method of claim 10, wherein said crosslinking agent is a peroxide, preferably wherein the amount of said crosslinking agent is about 0.3 % to 4 % of the total amount of other ingredients in weight.

**14.** The method of claim 19, wherein said peroxide is selected from benzoperoxide, 2,4-dichloro-benzoperoxide, dicumyl peroxide, di-t-butyl peroxide, 2,5.dimethyl-2,5-bis-t-butyl hexane peroxide, bis(t-butyl peroxy)peroxide, 2,5-dimethyl-2,5-bis(t-butylperoxy) hexane, t-butyl cumyl peroxide, preferably wherein said peroxide is 2,5-dimethyl-2, 5-bis-t-butyl hexane peroxide.

**15.** The method of claim 10, wherein said catalyst is a Pt catalyst.

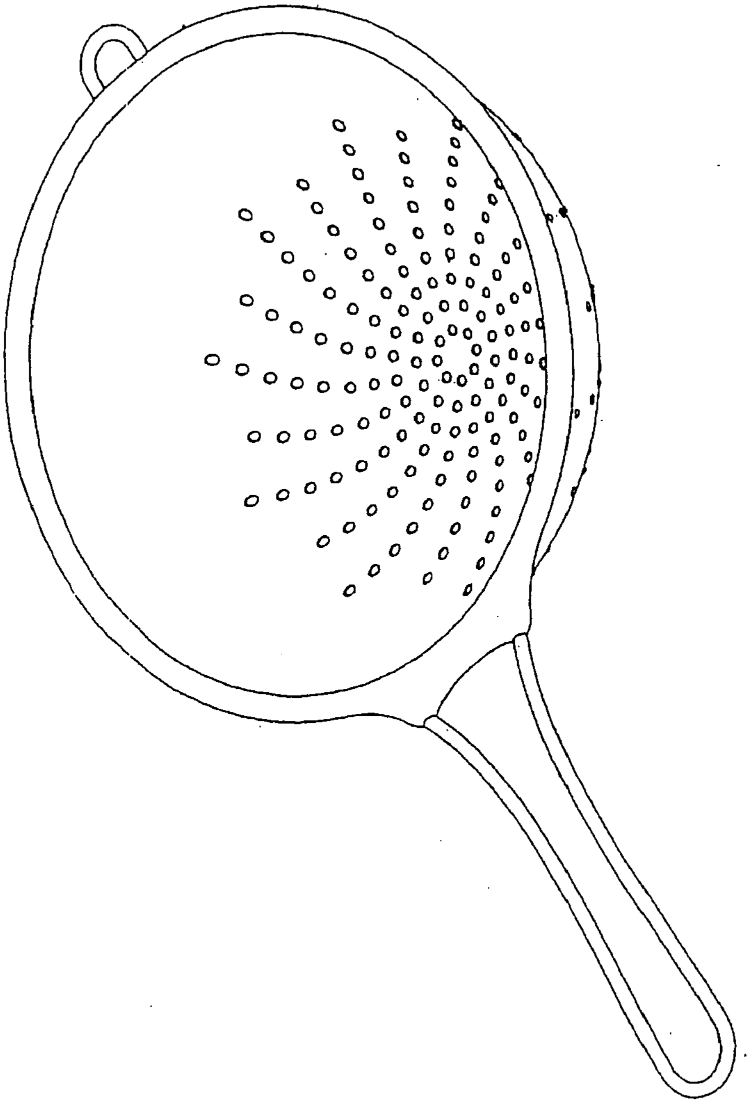

1

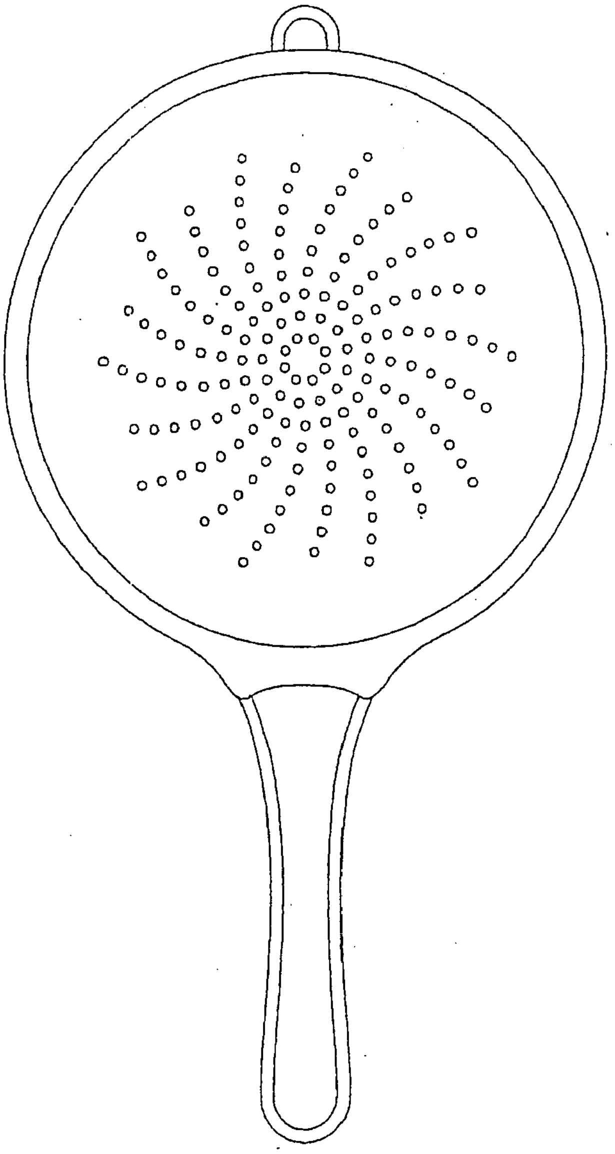

2

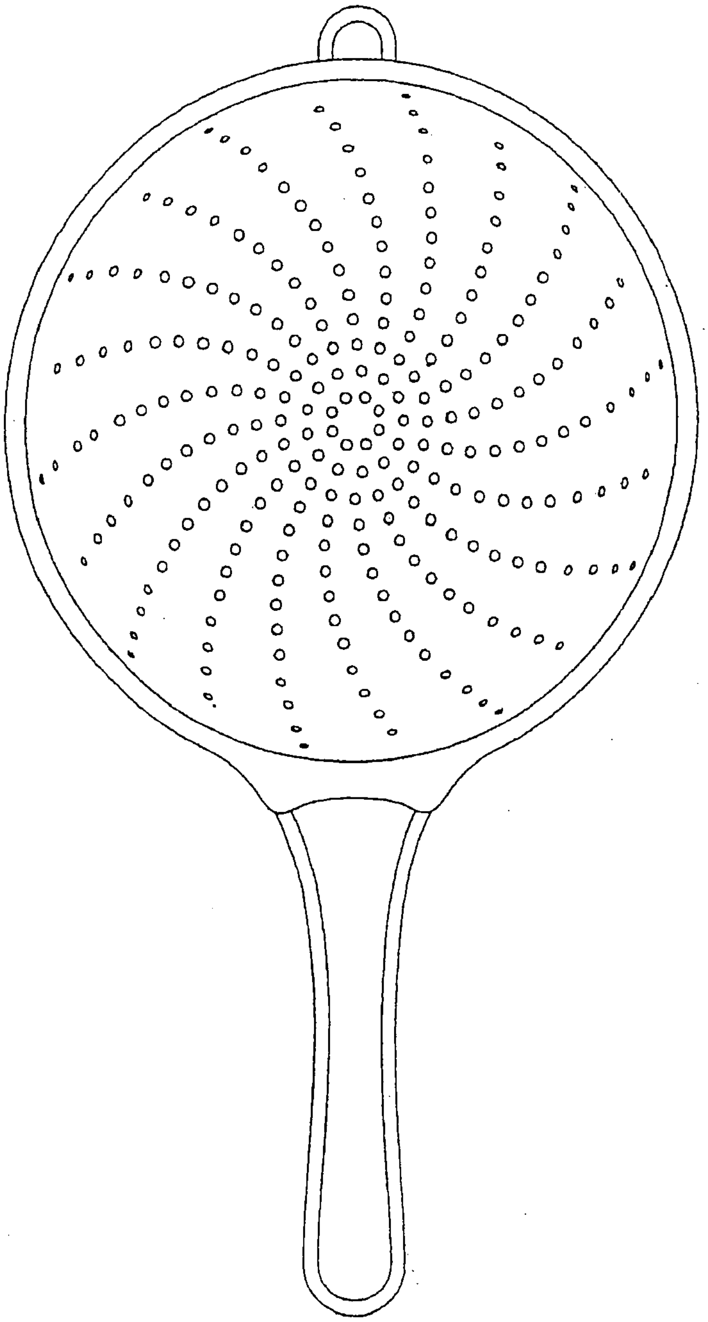

3

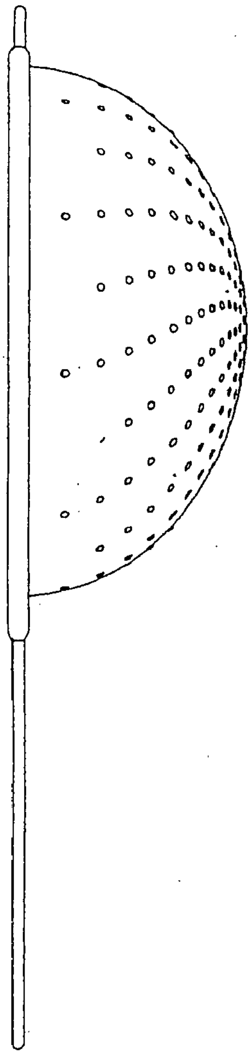

4

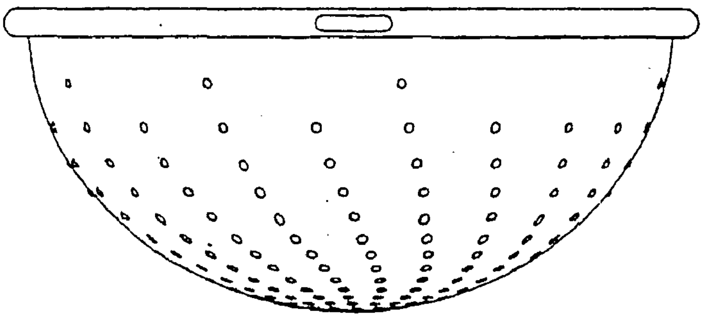

5

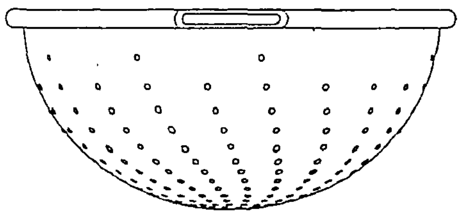

6

European Patent Office

# EUROPEAN SEARCH REPORT

Application Number
EP 06 01 2882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | WO 2006/054168 A (PAVONI ITALIA S P A [IT]; RAINERI PAOLO [IT]) 26 May 2006 (2006-05-26)<br>* abstract *<br>* page 2, lines 26-29 *<br>* page 3, lines 2-4 *<br>----- | 1-15 | INV.<br>A47J43/24<br><br>ADD.<br>C08L83/04 |
| A | US 2004/022978 A1 (FEHN ARMIN [DE] ET AL) 5 February 2004 (2004-02-05)<br>* abstract *<br>----- | 1,8 | |

TECHNICAL FIELDS SEARCHED (IPC)

A47J
C08L

The present search report has been drawn up for all claims

1

| Place of search | Date of completion of the search | Examiner |
|---|---|---|
| The Hague | 13 December 2006 | SAINZ MARTINEZ, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 06 01 2882

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2006

| Patent document cited in search report | Publication date | Patent family member(s) | Publication date |
|---|---|---|---|
| WO 2006054168 A | 26-05-2006 | NONE | |
| US 2004022978 A1 | 05-02-2004 | CN 1478819 A | 03-03-2004 |
| | | DE 10235267 A1 | 12-02-2004 |
| | | EP 1394200 A1 | 03-03-2004 |
| | | JP 2004107646 A | 08-04-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5438097 A
- US 5502107 A
- US 4623565 A